# EUROPEAN PATENT APPLICATION

(11) **EP 3 301 796 A1**
(43) Date of publication of application: **04.04.2018**
(21) Application number: 15892619.6
(22) Date of filing: 20.05.2015
(51) Int. Cl.: H02K 21/24, H02K 16/04

(54) **SERIES INDUCTION DC MOTOR**

(71) Applicant: Nishimura, Masayuki, Ayabe-city, Kyoto 623-0016 (JP)
(72) Inventor: Nishimura, Masayuki, Ayabe-city, Kyoto 623-0016 (JP)
(74) Representative: Herrero & Asociados, S.L.
(86) International application number: PCT/JP2015/065701
(87) International publication number: WO 2016/185620

(57) **Abstract**

This motor is a DC motor in which the rotor is rotated by magnetic force from a permanent magnet. The rotor has a combination of two or more permanent magnets, with fixed armatures with coils on either side in the direction of the rotation shaft, enabling the motor to be built with narrow housing. It is also theoretically possible to add permanent magnet rotors and fixed armatures alternately in a straight line in the direction extending from the end of the fixed armatures, which can be presumed to achieve a greater rotational force. The same effect can also be achieved by increasing the number of permanent magnet poles and increasing the number of fixed armatures in the aforementioned formation. The same rotational force can also be achieved by applying the mechanisms of a conventional motor.

The DC motor described in Application Item 2 has a rotor consisting of three armatures consisting of steel rods with coils arranged in fixed, parallel positions around a rotation shaft. Fixed permanent magnets are arranged on the left and right side of the rotor with the N and S poles in reverse phase, and a current is applied with a brush to generate rotation. The induction of rotation from permanent magnets on both sides of the armature enables smooth rotation, and enables the motor to be built with narrow housing. It does not differ from a conventional motor in that if the number of poles on the armature rotor is increased, the same rotation can be achieved by increasing the number of permanent magnets fixed on either side.

## Description

### (Technical Field)

This DC motor has a structure in which an induction rotation of an armature rotor and permanent magnet rotor is facilitated by parts such as a fixed permanent magnet and a fixed armature coil on either side of the rotation shaft separated by a gap.

### (Background Art)

Conventional DC motors usually have a structure in which a fixed armature or fixed magnet is placed in the area around the rotor to rotate the rotor inside, or the rotor is placed in the area around the fixed armature, etc. to generate a rotating motion.

### (Summary of Invention)

For armature rotors with a coil around the steel core, fixed permanent magnets are placed on either side in the direction of the rotation shaft and a current is applied to the armature coil, enabling rotation equal to that of a conventional motor.

A similar principle is used for rotors with a permanent magnet. A fixed armature with a coil is placed on either side in the direction of the rotation shaft, with a gap in between, and a current is applied by a semiconductor via a magnetic detector, enabling rotation equal to that of a conventional motor. The basic structure and mode of operation do not differ at all from a conventional motor, but this invention enables torque to be generated regardless of the direction of the inductive force used to rotate the rotor.

### (Technical Problem)

Unlike a conventional motor, the area around the motor can be reduced by not placing parts such as fixed armatures in the area around the rotor, but nobody was aware of this because the conventional structure was thought to be ubiquitous.

### (Solution to Problem)

Conventional wisdom dictates that induction in a motor is created using the area around the rotor, and that aspects of this make it structurally impossible to make it smaller.

We discovered that the rotor would rotate even when induction was applied in the direction of the shaft. The gap between the rotor and parts such as the fixed armatures and fixed magnets can also be created on a flat surface, simplifying the structure and making it easier to produce than a conventional motor. This will make it possible to supply motors that will rotate in smaller or narrower areas.

### (Advantageous Effects of Invention)

Two bar-shaped permanent magnets are placed parallel to each other with their N and S poles in reverse phase. The rotation shaft is placed in the center and fixed armatures are placed with a gap in the direction of the rotation shaft at the ends of the rotor between the two parallel bar shaped magnets. A current is applied to start rotation of the rotor. The fixed armature is not placed in the area around the rotating surface of the rotor, enabling a smaller area around the rotor.

In both the motor where three armatures with a coil around the steel core are placed around the rotation shaft and permanent magnets are installed with gaps at both shaft bearing ends in the direction of the rotation shaft of the rotor, and the motor with fixed armatures and fixed permanent magnets, there are twice as many fixed permanent magnets on either side of the rotor as there are in a conventional motor. This enables greater inductive force and thus smoother rotation in this series induction DC motor.

If the poles of the permanent magnet rotor are increased, the same effect can be achieved by increasing the number of armatures at the same rate.

### (Brief Description of Drawing)

(Fig. 1) Fig. 1 provides a schematic explanatory drawing and schematic wiring drawing of the motor in Example 1, with a transverse sectional view and view from the front right.
(Fig. 2) Fig. 2 provides a schematic explanatory drawing of the motor in Example 2 (excluding the housing and fixed permanent magnets), with a transverse sectional view and view from the front right.
(Fig. 3) Fig. 3 provides a schematic explanatory drawing and schematic wiring drawing of the motor in Example 1 in a case where the structure of the motor is changed so that there are 4 permanent magnetic around the rotor, with a transverse sectional view and view from the front right.

### (Example 1)

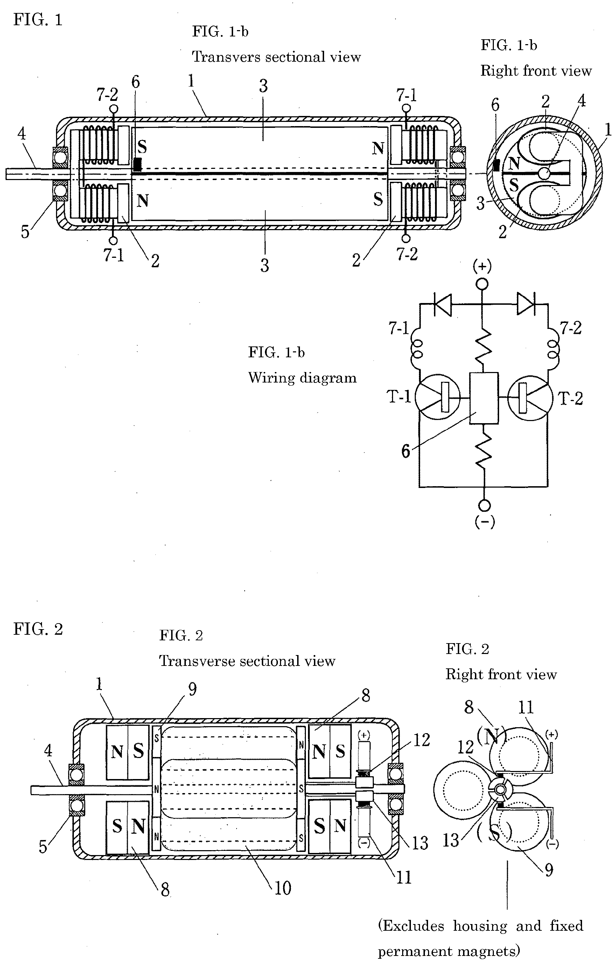

This structure of the series induction DC motor has one rotor where two bar-shaped permanent magnets bent into a half-moon shape are placed on either side so that the N and S poles are in reverse phase, and one fixed armature each on the shaft bearing sides at the left and right ends of the bar-shaped magnets. When a current is applied to armature coil 7-1 attached on the left and right side of the permanent magnet rotor in Fig. 1, a current simultaneously runs from the reverse direction along the fixed armature coil at the left end of the permanent magnet rotor. A detector detects whether the magnetic pole surface of the permanent magnet rotor is the N pole or the S pole and changes the direction of the current to enable continuous smooth rotation. The number of fixed armatures has been reduced in the drawing for simplicity's sake, but many parts such as the inverter and position sensor can be used in the same way as a conventional motor even with three fixed armatures. If the number of NS poles on the permanent magnet rotor is increased, the same effect can be achieved by increasing the number of armatures at the same rate.

### (Example 2)

This motor has an armature rotor consisting of three steel rods with coils around a rotation shaft. Unlike a conventional motor, the rotation shaft and coils around the steel rods are arranged in a parallel formation. Permanent magnets are fixed at either end of the armature rotor with the N and S poles facing opposite directions. A current is applied to the rotation shaft with a brush, generating magnetic force in the coils around the iron rods and causing reactions in the fixed permanent magnets on either side that cause rotation to start. The basic structure is the same as a conventional motor; the major differences are that the fixed permanent magnets are not placed around the outside of the rotor and the gaps between the magnets and steel rods are created on a flat surface, making processes such as production easier.

### (Example 3)

A variation on the structure of Example 1 where the number of permanent magnets on the rotor is increased to 4 and two pairs of armatures are added to both sides in the direction of the rotation shaft (see Fig. 3).

### (Industrial Applicability)

These structures make it possible to create narrow motors that can be used for tightening screws in narrow areas, processing of fine parts or applications in surgical products. They will also be effective even if the permanent magnets are made from comparatively weak magnetic material, due to the structure of the motor.

With both the structure combining an armature rotor with fixed permanent magnets and the structure with a permanent magnet rotor, the gaps between the flat parts of the rotor and parts such as the fixed armatures are created on a flat surface, making it easier to create uniform gaps than when creating gaps in the round area of a conventional motor.

### (Reference Signs List)

1. Motor housing
2. Fixed armature
3. Permanent magnet rotor
4. Rotation shaft
5. Shaft bearing and ball
6. Magnetic force detector
7. 7-1 and 7-2 (power terminals)
8. Fixed permanent magnet
9. Steel core of rotating armature
10. Armature coil
11. Flat spring
12. Brush
13. Commutator

## Claims

1. A motor consisting of a rotor with permanent magnets and fixed armatures with coils on either side in the direction of the rotation shaft with gaps in between. A current is applied to generate rotational force, with the current changing direction via a magnetic force detector on a fixed armature. The motor can be customized by increasing the number of magnets on the rotor and the number of fixed armatures proportionately.

2. A motor consisting of multiple armatures consisting of steel rods with coils, arranged around a central shaft in a parallel formation. Fixed permanent magnets are arranged on either side of the rotor in the direction of the rotation shaft with gaps in between. Rotation is generated by applying a current to the armature rotors with a brush.
